Europäisches Patentamt

European Patent Office

Office européen des brevets

(11) Publication number: **0 340 666**
**A1**

## (12) EUROPEAN PATENT APPLICATION

(21) Application number: **89107765.3**

(22) Date of filing: **28.04.89**

(51) Int. Cl.⁴: **B01D 53/34 , C10L 10/00**

(30) Priority: **29.04.88 US 187943**

(43) Date of publication of application:
**08.11.89 Bulletin 89/45**

(84) Designated Contracting States:
**ES GR**

(71) Applicant: **FUEL TECH, INC.**
**61 Taylor Reed Place**
**Stamford, CT 06906(US)**

(72) Inventor: **Epperly, William Robert**
**32 Canaan Close 289 New Norwalk Road**
**New Canaan Connecticut 06840(US)**
Inventor: **Sprague, Barry Normand**
**82 Longmeadow Road**
**Bethlehem Connecticut 06751(US)**
Inventor: **von Harpe, Thure**
**Vruehler Weg 47**
**D-4005 Meerbusch I(DE)**

(74) Representative: **Vossius & Partner**
**Siebertstrasse 4 P.O. Box 86 07 67**
**D-8000 München 86(DE)**

(54) **Composition for introduction into a high temperature environment.**

(57) The invention presented is a low-cost composition for introduction through an injector having an injector tip into a high temperature environment for reducing the nitrogen oxides concentration in the high temperature environment, the composition comprising:

a) a low-cost nitrogen oxides reducing treatment component which is effective at reducing the nitrogen oxides concentration in the environment;

b) dilution water; and

c) a viscosity/coking time modifier having a boiling point greater than about the boiling point of the dilution water at conditions existing at the injector tip and viscosity less than that of the nitrogen oxides reducing treatment component at conditions existing at the injector tip and wherein the viscosity/coking time modifier also reduces the nitrogen oxides concentration in the environment; and/or

a sequestering agent capable of preventing deposits at the injector due to hardness metals commonly found in the nitrogen oxides treatment component and/or the dilution water and wherein the sequestering agent also reduces the nitrogen oxides concentration in the environment; and/or

an antiscalant capable of preventing deposits at the injector due to hardness metals commonly found in the nitrogen oxides treatment component and/or the dilution water and wherein the antiscalant also reduces the nitrogen oxides concentration in the environment.

EP 0 340 666 A1

## COMPOSITION FOR INTRODUCTION INTO A HIGH TEMPERATURE ENVIRONMENT

Related Applications

This application is a continuation-in-part of copending and commonly assigned U.S. Patent Application entitled "Composition for Introduction Into a High Temperature Environment" having Serial No. 07/187,943 and filed on April 29, 1988 in the names of Epperly and Sprague, the disclosure of which is incorporated herein by reference.

Technical Field

The present invention relates to a composition for introduction through an injector into a high temperature environment, especially the effluent from the combustion of a carbonaceous fuel, to reduce the nitrogen oxides ($NO_x$) concentration in the environment. Typically, the high temperature environment into which the composition is introduced is at a temperature of greater than about 800°F.

Carbonaceous fuels can be made to burn more completely, and with reduced emissions of carbon monoxide and unburned hydrocarbons, when the oxygen concentrations and air/fuel ratios employed are those which permit high flame temperatures. When fossil fuels are used in, for instance, suspension fired boilers such as large utility boilers, temperatures above about 2000°F. and typically about 2200°F. to about 3000°F. are generated. Unfortunately, such high temperatures, as well as hot spots of higher temperatures, tend to cause the production of thermal $NO_x$, the temperatures being so high that free radicals of oxygen and nitrogen are formed and chemically combine as nitrogen oxides. Nitrogen oxides can form even in circulating fluidized bed boilers which operate at 1400°F. to 1600°F, and have flue duct systems that operate down to 800°F. or below, and gas turbines which have flue gas duct systems that operate at 800°F. to 1700°F. or higher.

Nitrogen oxides are troublesome pollutants which are found in the combustion effluent streams of boilers when fired as described above, and comprise a major irritant in smog. It is further believed that nitrogen oxides can undergo a process known as photo-chemical smog formation, through a series of reactions in the presence of sunlight and hydrocarbons. Moreover, nitrogen oxides comprise a significant contributor to acid rain.

Unfortunately, when commonly known compositions are utilized to reduce nitrogen oxides, the amounts required to reduce $NO_x$ levels to within acceptable ranges are such that most processes are extremely expensive. Those compositions which are relatively less expensive have severe drawbacks in that the high temperatures existing at the tips of injectors used to introduce treatment compositions into nitrogen oxides containing effluents can, especially if there is a flow stoppage, cause blockages due to the relatively high viscosity of such compositions and also coking of such compositions. Moreover, hardness metals present in such compositions as well as in dilution water can also cause blockages at the injector tip by forming deposits, especially if there is a flow stoppage.

Background Art

Processes and compositions for the reduction of nitrogen oxides in an effluent from the combustion of a carbonaceous fuel have been developed extensively over recent years. With the increased attention to the health risks and environmental damage caused by agents such as smog and acid rain, it is expected that $NO_x$ reduction research will continue to be pursued.

In the past, most processes for the reduction of nitrogen oxides levels have concentrated on those compositions most efficient at maximizing nitrogen oxides reductions, or on achieving nitrogen oxides reductions without also causing the production of substantial amounts of other pollutants such as ammonia or carbon monoxide. What is generally ignored, though, is the cost of such compositions and the ability to effectively deliver them under the destabilizing conditions existing in the effluents which contain nitrogen oxides.

What is desired, therefore, is a composition for reducing the presence of nitrogen oxides in a high temperature environment, such as that of the effluent from the combustion of a carbonaceous fuel, which is low cost yet able to be effectively introduced through an injector having an injector tip into such high temperature environment.

## Disclosure of Invention

This invention presents a low-cost composition for introduction through an injector having an injector tip into a high temperature environment for reducing the nitrogen oxides concentration in the high temperature environment, the composition comprising:

a) a low-cost nitrogen oxides reducing treatment component which is effective at reducing the nitrogen oxides concentration in the environment;

b) dilution water; and

c) a viscosity/coking time modifier having a boiling point greater than about the boiling point of the dilution water at conditions existing at the injector tip and viscosity less than that of the nitrogen oxides reducing treatment component at conditions existing at the injector tip and wherein the viscosity/coking time modifier also reduces the nitrogen oxides concentration in the environment; and/or

a sequestering agent capable of preventing deposits at the injector due to hardness metals commonly found in the nitrogen oxides treatment component and/or the dilution water and wherein the sequestering agent also reduces the nitrogen oxides concentration in the environment; and/or

an antiscalant capable of preventing deposits at the injector due to hardness metals commonly found in the nitrogen oxides treatment component and/or the dilution water and wherein the antiscalant also reduces the nitrogen oxides concentration in the effluent.

## Brief Description of the Drawings

The present invention will be better understood and its advantages more apparent in view of the following detailed description, especially when read with reference to the appended drawings, wherein:

FIGURE 1a graphically represents the results of Example Ia;

FIGURE 1b graphically represents the results of Example Ib;

FIGURE 2a graphically represents the results of Example IIa; and

FIGURE 2b graphically represents the results of Example IIb.

FIGURE 2c graphically represents the results of Example IIc.

## Description of the Preferred Embodiment

As noted above, the high temperature environments which contain nitrogen oxides into which the composition of the present invention is intended to be introduced generally comprise the effluent from the combustion of a carbonaceous fuel. Such effluents are most commonly found in large utility boilers, in circulating fluidized bed boilers and in gas turbines. It will be understood, though, that although written in terms of the reduction of nitrogen oxides in the effluent from the combustion of a carbonaceous fuel, the present invention is applicable in any high temperature environment having nitrogen oxides which are desired to be reduced. By "high temperature environment" is meant an environment wherein the temperature is sufficient to adversely affect the ability to effectively introduce a low cost nitrogen oxides reducing composition into the environment. Such temperatures will typically be greater than about 800°F. and can be as high as about 1900°F., even as high as 2100°F. and higher.

In most NO$_x$ reducing processes, the composition is introduced into the effluent by an injector having an injector tip. Suitable injectors are conventionally known and generally comprise a simple tubular structure extending into the environment, with the nitrogen oxides reducing composition supplied by pumping means through the tubular structure and into the environment. The end of the injector which extends into the environment is what is commonly known as the injector tip. More sophisticated apparatus for introducing NO$_x$ reducing compositions into a high temperature environment are also known and generally comprise coaxial, multi-tubular structures, such as those disclosed by Burton in copending and commonly assigned U.S. Patent Application Serial No. 07/009,696 entitled "Process and Apparatus for Reducing the Concentration of Pollutants in an Effluent", filed February 2, 1987; and by DeVita in copending and commonly assigned U.S. Patent Application having Serial No. 07/160,684 entitled "Process and Injector for Reducing the Concentration of Pollutants in an Effluent", filed February 26, 1988, and copending and commonly assigned U.S. Patent Application having Serial No. 07/319,173 entitled "Process and Injector for Reducing the Concentration of Pollutants in an Effluent," filed March 3, 1989, the disclosures of each of which are incorporated herein by reference.

The drawback of these injectors is that many known nitrogen oxides reducing treatment components which are sufficiently low cost to be economical to the user are either of such high viscosity and/or have such low coking times, or contain high enough amounts of hardness metals, as will be discussed in more detail below, that difficulties with pumping at the injector tip can occur, due either to the high viscosity or to blockages caused by coking or deposits of hardness metals. This problem can be exacerbated by flow stoppages which can occur for various reasons familiar to the skilled artisan. Such pumping difficulties substantially interfere with flow of the treatment component into the high temperature environment. By "substantially interfere with flow" is meant to significantly reduce the flow of the treatment component into the high temperature environment to an extent wherein nitrogen oxides reduction by the component is seriously impaired, including complete blockage of the injector tip and resultant injector failure.

By "low cost nitrogen oxides treatment components" is meant treatment components sufficiently low cost to be economical when introduced in amounts sufficient to significantly reduce $NO_x$ levels in the effluent from the combustion of a carbonaceous fuel. Suitable treatment components are non-acidic oxygenated hydrocarbons having a molecular weight of greater than about 150 ("non-acidic" is meant to include components having trace quantities of acidic impurities). Exemplary are those which cost, in U.S. dollars as of the filing date of this application, no greater than about $0.10 per pound. Most preferably, such oxygenated hydrocarbons are selected from the group consisting of sugar, lignin derivatives, starch, cellulosic materials and low rank coals and mixtures thereof. These materials are sufficiently low cost because they are often produced as byproducts of processes which have the primary purpose of producing a different substance.

As used herein, the term "oxygenated hydrocarbon" refers to a hydrocarbon which contains oxygen or an oxygen-containing group; the term "sugar" refers to a number of useful saccharide materials which are capable of decreasing the $NO_x$ concentration in an effluent under conditions as described herein, including non-reducing and reducing water soluble mono-saccharides and the reducing and non-reducing polysaccharides and their degradation products, such as pentoses including aldopentoses, methyl pentoses, keptopentoses like xylose and arabinose, deoxyaldoses like rhaminose, hexoses and reducing saccharides such as aldohexoses like glucose, galactose and mannose, ketohexoses like fructose and sorbose, disaccharides like lactose and maltose, non-reducing disaccharides like sucrose and other polysaccharides such as dextrin and raffinose, hydrolyzed starches which contain as their constituents oligosaccharides, water dispersible polysaccharides, and the byproducts of sugar manufacture, like molasses; the term "starch" refers to a carbohydrate polymer having repeating units and comprised generally of about 25% amylose (anhydroglucopyranose units joined by glucosidic bonds) and about 75% amylopectin; the term "cellulosic materials" refers to materials consisting of a carbohydrate high polymer (polysaccharide) consisting of anhydroglucose units joined by an oxygen linkage to form long, essentially linear molecular chains; the term "lignin" refers to a phenylpropane polymer of amorphous structure derived as a wood byproduct; and the term "low rank coal" refers to peat, lignite or sub-bituminous coal.

Such treatment components are effective at reducing the nitrogen oxides concentration in the environment, and are generally of a viscosity sufficiently high to substantially interfere with their flow at the high temperature conditions which often exist at an injector tip and also have a tendency to coke (i.e., form carbonaceous deposits) at such high temperature conditions which also substantially interferes with flow. This effect is especially pronounced if the conditions at the injector tip are such that most (i.e., greater than about 50%) of the diluent, such as water, is evaporated away, such as when flow stoppages occur. Often, such low cost nitrogen oxides reducing treatment components also comprise hardness metals such as calcium and magnesium which can form deposits at injector tips, especially when heated. This effect is also more pronounced when dilution water is evaporated away.

Prior to further dilution for introduction into the high temperature environment, as will be discussed in more detail below, the nitrogen oxides reducing treatment component utilized as described herein is generally included in the composition of this invention in an amount of about 25% to about 95% by weight, in order to produce a composition effective at reducing nitrogen oxides in the effluent from the composition of a carbonaceous fuel. Advantageously, the component is present in the composition in an amount of about 30% to about 90% by weight, most advantageously about 35% to about 85% by weight.

In situations where the nitrogen oxides reducing treatment component has a viscosity sufficiently high to substantially interfere with its flow at the high temperature conditions which exist at an injector tip and/or has a tendency to coke at such high temperature conditions, it is important to insure adequate introduction of the component into the effluent by providing a viscosity/coking time modifier. Suitable viscosity/coking time modifiers are those materials which are more stable than the nitrogen oxides reducing treatment component at the conditions existing at the injector tip, have a boiling point greater than about the boiling

4

point of the dilution water at conditions existing at the injector tip (it will be recognized that boiling point is effected by conditions such as pressure which can effect different materials to different extents) and have a viscosity less than that of the nitrogen oxides reducing treatment component at conditions existing at the injector tip (it will also be recognized that viscosity is effected by conditions such as temperature and pressure which can effect different materials to different extents). Of course, the viscosity/coking time modifiers of necessity have a viscosity sufficiently low to prevent interference with their flow under high temperature conditions, even if most of the dilution water is evaporated away, and do not have a tendency to coke even when heated and/or when most of the dilution water is evaporated away. In order to maximize $NO_x$ reductions achievable by the composition of the present invention, the viscosity/coking time modifier most preferably also reduces the nitrogen oxides concentration in the environment.

To be useful herein, the viscosity/coking time modifier should be either water soluble or water dispersible. Preferably, the viscosity/coking time modifier is selected from the group consisting of oxygenated hydrocarbons, especially polyols and esters, which cost at least about 1.5 times, more often greater than about 2.5 times, that of the nitrogen oxides reducing treatment component, and non-oxygenated hydrocarbons (which, although effective at viscosity/coking time modification, are significantly less cost effective than oxygenated hydrocarbons at reducing nitrogen oxides concentrations). Suitable viscosity/coking time modifiers are most preferably selected from the group consisting of formamide, glycerine, propylene glycol, ethylene glycol, diethylene glycol, triethylene glycol, hexylene glycol, tetraethylene glycol, distillate fuels and menhaden oil and mixtures thereof. In a common commercial environment, the viscosity/coking time modifier, especially when an oxygenated hydrocarbon, will cost, in U.S. dollars as of the filing date of this application, greater than about $0.10 per pound.

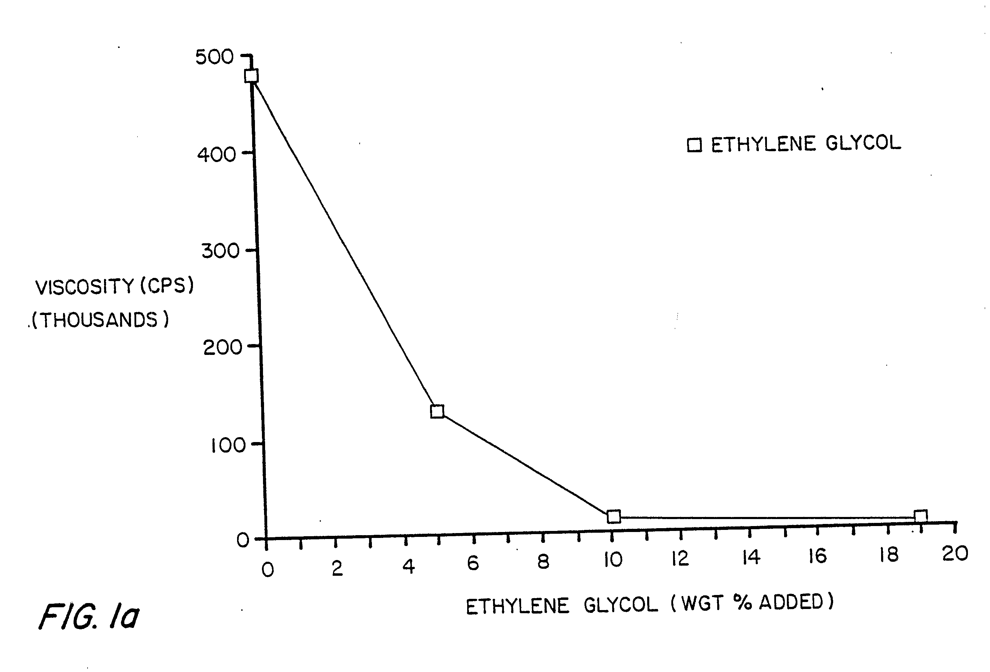

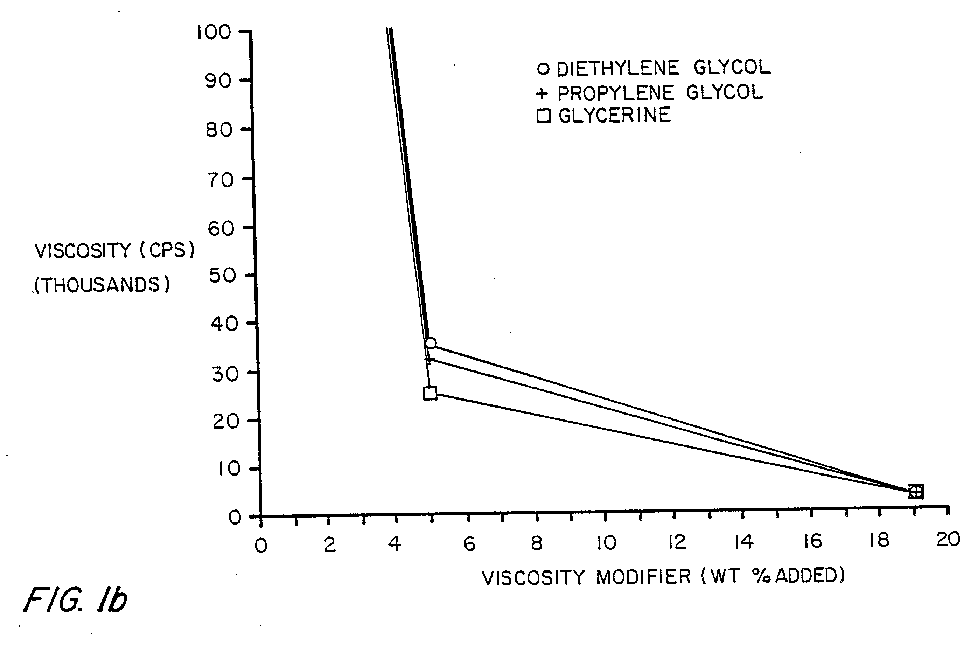

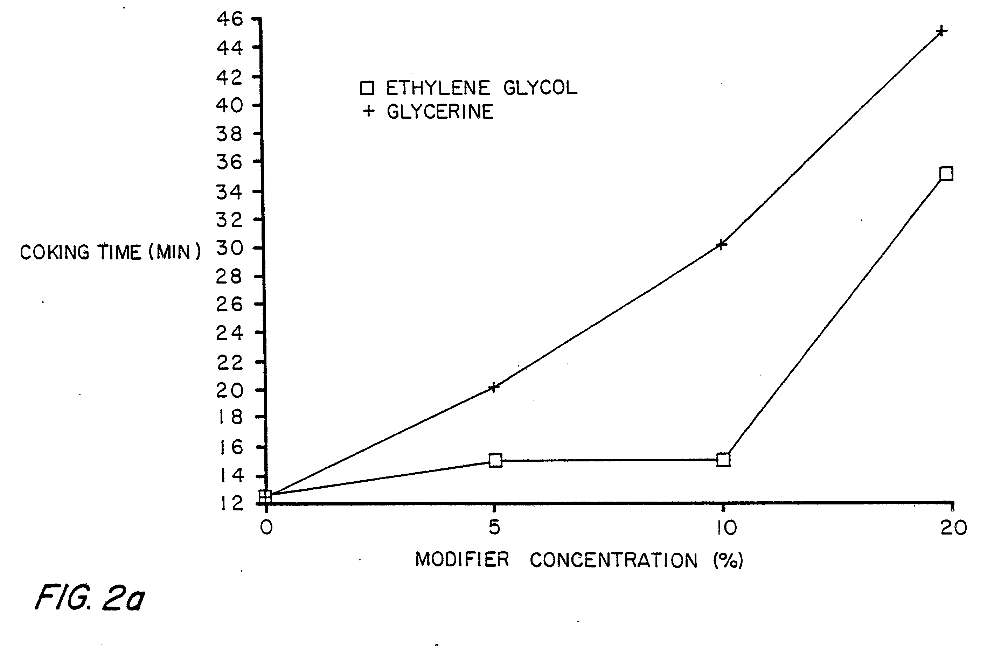

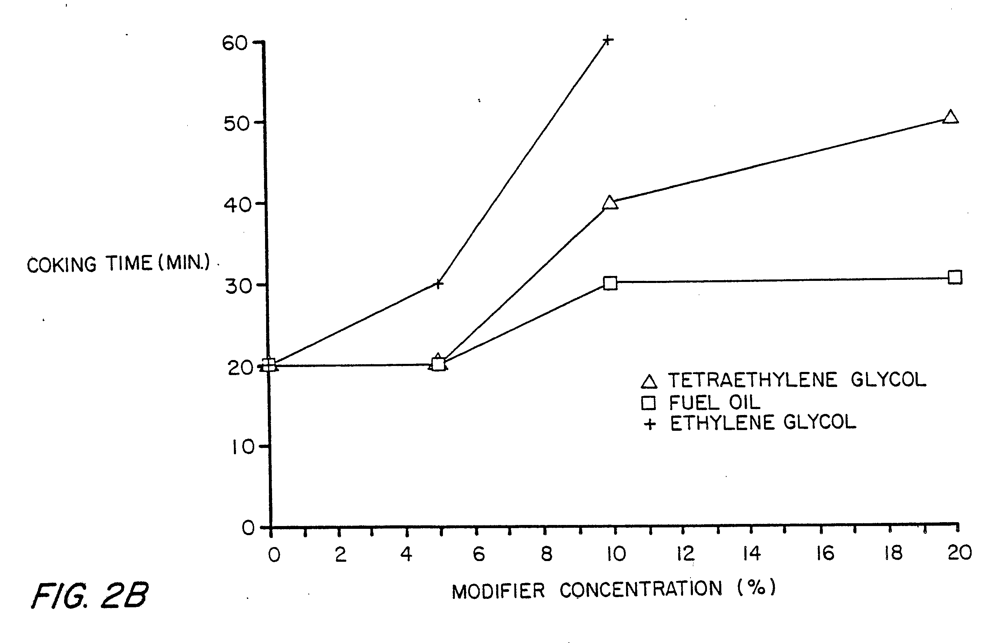

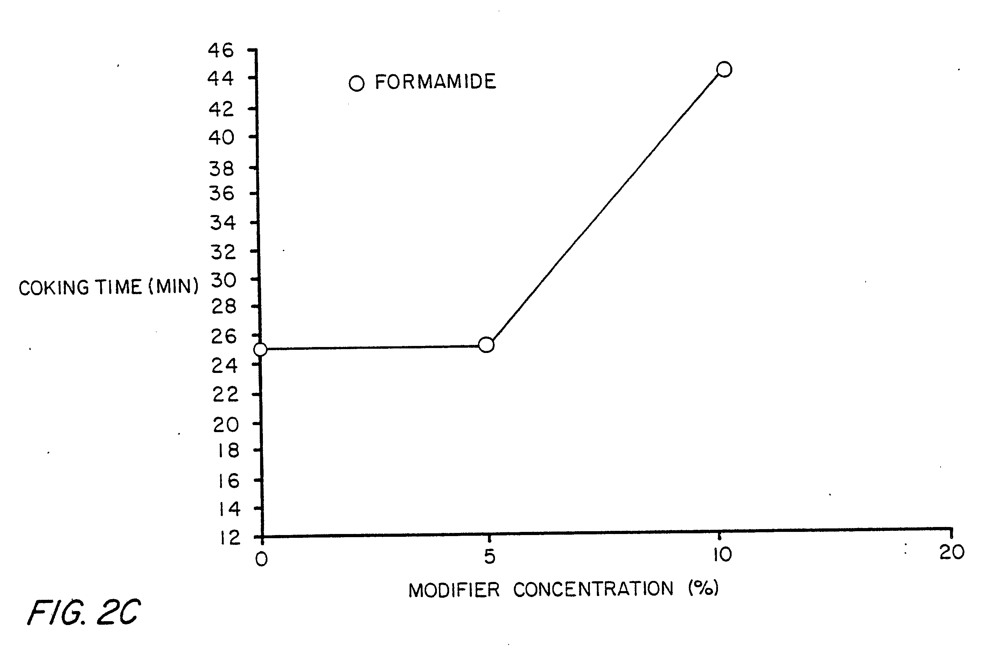

The viscosity/coking time modifier is present in the composition of the present invention in an amount sufficient to significantly lower the viscosity and/or extend the coking time of the composition. In other words, the viscosity/coking time modifier is present in an amount sufficient to reduce the interference with flow caused by the viscosity or coking of the composition. Moreover, as noted above, the nitrogen oxides reducing treatment component is low cost and the viscosity/coking time modifiers are of significantly higher cost or significantly less cost effective at $No_x$ reductions. In order to maintain the composition of the present invention as a relatively low cost composition, therefore, it is highly preferred that only that amount of the viscosity/coking time modifier be included in the compositions as will provide the most benefit for the increased cost. To do otherwise would be to substantially reduce the low cost nature of the composition, even though the viscosity/coking time modifier is contributing to the nitrogen oxides reduction. Accordingly, the viscosity/coking time modifier is advantageously present in the composition in an amount no greater than that approximately most efficient according to a cost-benefit analysis. Cost-benefit analyses in terms of viscosity and/or coking time modification for several exemplary viscosity/coking time modifiers are presented in Examples la, lb, IIa, IIb and IIc and reproduced graphically in Figures 1a, 1b, 2a, 2b and 2c. In the situations where the cost-benefit analysis for viscosity modification and for coking time modification for a particular viscosity/coking time modifier each lead to the suggestion to use different amounts of the modifier for the two different purposes, either the higher amount can be chosen to provide the most benefit, or the lower amount can be chosen to minimize cost, or an average or other amount between the two chosen, depending on the particular needs of the practitioner.

In most applications, it will be found that the viscosity/coking time modifier is present in an amount of about 1% to about 25% by weight, more preferably about 5% to about 20% by weight, most preferably about 10% to about 15% by weight, prior to further dilution for introduction into the high temperature environment, as discussed in more detail below.

The nitrogen oxides reducing treatment component of this invention, whether or not it has the viscosity and coking time characteristics described above, often contains hardness metals such as calcium and magnesium. Such hardness metals are undesirable because they can form deposits, such as of calcium or magnesium carbonates, at the injector tip, leading to blockages. Moreover, if the dilution water used is not "soft" water, the dilution water can also contribute hardness metals with the resultant blockage problem. The use of a nitrogen oxides reducing treatment component without hardness metals, or the use of boiler feed water or water softeners can either add additional steps to the preparation of the composition of this invention, or considerably add to the cost of the composition, or both. The composition of the present invention, therefore, can comprise a sequestering agent and/or an antiscalant to avoid the problems caused by hardness metals and substantially maintain the low cost nature of the composition of the present invention.

A suitable sequestering agent according to this invention is one which is capable of reducing or even preventing deposits at the injector tip due to hardness metals found in the nitrogen oxides treatment component and/or the dilution water. In order to maximize $NO_x$ reductions achievable with the inventive composition, the sequestering agent should preferably also reduce the nitrogen oxides concentration in the environment.

Exemplary of sequestering agents capable of performing these functions are those which comprise some organic acids or salts thereof, particularly organic hydroxy acids and amine derived polyacetic acids and salts thereof, as well as mixtures thereof. The term "organic acid" refers to any hydrocarbon having at least one carboxyl group (-COOH). As will be apparent to the skilled artisan, "organic hydroxy acids" are organic acids having at least one hydroxyl group (-OH) wherein the hydroxy groups are not attached to the same carbon as the carboxyl groups, and "amino polyacetic acids" are organic acids having at least one amine group and more than one acetic acid group ($-CH_2COOH$). The sequestering agent is most preferably selected from the group consisting of gluconic acid, tartaric acid, glucoheptonic acid, citric acid, nitrilotriacetic acid, diethylenetriamine pentaacetic acid, N-hydroxy ethyl ethylenediaminetetraacetic acid and ethylenediaminetetraacetic acid and salts and mixtures thereof.

The sequestering agent is preferably included in the composition of this invention in an amount sufficient to substantially reduce deposits at the injector tip caused by hardness metals. Sequestering agents suitable for use in the present invention generally cost at least about 1.5 times, more often greater than about 2.5 times, that of the nitrogen oxides reducing treatment component. Therefore, the sequestering agent is, as was the case with the viscosity/coking time modifier, advantageously present in an amount consistent with a positive cost-benefit analysis of the sequestering function provided by said sequestering agent. In other words, in order to maintain the composition of the present invention as low cost, the amount of sequestering agent employed should be that which is most efficient at sequestering hardness metals per amount utilized and depends also on the amount of hardness metals present. The sequestering agent will generally comprise about 0.1% to about 10% by weight of the composition of the present invention.

A suitable antiscalant according to this invention is one which is capable of reducing or even preventing deposits at the injector due to hardness metals found in the nitrogen oxides treatment component and/or the dilution water. In order to maximize $NO_x$ reductions achievable with the inventive composition, the antiscalant should preferably also reduce the nitrogen oxides concentration in the environment.

Exemplary of antiscalants capable of performing these functions are those which comprise polycarboxylate acids or salts, especially ammonium or sodium salts thereof (with the free acid being more preferred) and aqueous solutions of such acids or salts. Advantageously, the antiscalant is acidic, with a preferred pH of less than about 9 and a more preferred pH of less than about 6, and desirably comprises a water soluble polyacrylic acid or salt thereof which most preferably has a molecular weight of no greater than about 3000. Most advantageously, the antiscalant of this invention comprises a mixture of about 1% to about 9u% by weight of polyacrylic acid and about 1% to about 90% by weight of an organo-phosphonic acid or salt thereof, preferably an alkyl, especially a lower alkyl (1-10 carbon), phosphonic acid which, in addition to contributing to the antiscaling properties of the antiscalant, also functions as a corrosion inhibitor, to reduce corrosion in the handling system (i.e., tanks, conduits, etc.) of the composition of the present invention. The organophosphonate also provides hydrolytic stability to the antiscalant (by which is meant resistance to hydrolytic degradation in aqueous solutions at elevated temperatures and extremes of pH for prolonged periods of time). Desirably, the antiscalant also comprises about 1% to about 90% by weight of phosphoric acid.

Suitable antiscalants are available as Ferrophos 8500, which is a mixture of phosphoric and polyacrylic acids having a pH of 1.8, Ferrolin 8441, which is a mixture of phosphoric, phosphonic and polyacrylic acids having a pH of 2.4, and Ferrophos 8461, which is a low molecular weight salt of polyacrylic acid having a pH of 8.2. Each of these is commercially available from Henkel Corp. of Ambler, Pennsylvania.

The antiscalant is preferably included in the composition of this invention in an amount sufficient to substantially reduce deposits at the injector tip caused by hardness metals. Antiscalants suitable for use in the present invention generally cost about at least 1.5 times, more often greater than about 2.5 times, that of the nitrogen oxides reducing treatment component. Therefore, the antiscalant is, as was the case with the viscosity/coking time modifier, advantageously present in an amount consistent with a positive cost-benefit analysis of the antiscaling function provided by said antiscalant. In other words, in order to maintain the composition of the present invention as low cost, the amount of antiscalant employed should be that which is most efficient at preventing deposits of hardness metals per amount utilized and depends also on the amount of hardness metals present. The antiscalant will generally comprise about 0.01% to about 1% by weight of the composition of the present invention.

If desired, the composition of the present invention can comprise both a sequestering agent and an antiscalant, since the two function in complementary fashion and would effectively reduce or prevent deposits at the injector tip.

The inventive composition may also, if desired, comprise an emulsifier/dispersant to maintain its components dispersed throughout the composition and to help maintain the low viscosity of the composition by dispersion of any solids formed by water loss through evaporation. The emulsifier/dispersant can be any suitable cationic, anionic, nonionic or amphoteric compound or composition known to function as an emulsifier/dispersant and is preferably selected from the group consisting of nonylphenoxypoly-(ethyleneoxy) ethanol, alkylphenoxypoly(ethyleneoxy) ethanol, substituted imidazoline of tall oil fatty acids, linear alkylaryl triethanolamine sulfonate and sodium lauryl sulfate and mixtures thereof.

The dilution water used in the present invention can be from any water source and, as noted above, is not required to be "soft" or treated water when a sequestering agent and/or an antiscalant is used in the composition of the present invention. Other components may also be present in the inventive composition, such as biocides or other preservatives, odorants and/or colorants, as desired by the practitioner.

By the practice of the present invention, a nitrogen oxides reducing composition is prepared which is at once low cost yet capable of being introduced into a high temperature environment through an injector having an injector tip under conditions which often exist at the injector tip.

Generally, in $NO_x$ reducing processes, the composition of the present invention is introduced into the nitrogen oxides containing environment as a component of a $NO_x$ reducing treatment agent. Typically, such $NO_x$ reducing treatment agent comprises an aqueous solution which preferably comprises about 0.1% to about 25% by weight of the composition of this invention. Advantageously, the treatment agent can also comprise other components for achieving nitrogen oxides reductions, such as ammonia, disclosed by Lyon in U.S. Patent No. 3,900,554, the disclosure of which is incorporated herein by reference, or urea, disclosed by Arand et al. in U.S. Patent Nos. 4,325,924 and 4, 208,386, the disclosures of which are incorporated herein by reference, or other nitrogen-containing compounds, as would be familiar to the skilled artisan.

The following examples further illustrate and explain the invention.

Example I

The viscosity of several formulations is measured according to the following procedure in order to prepare a cost/benefit analysis of several viscosity modifiers:

a. 150 grams (±5 grams) of the formulation to be tested is placed in a beaker;

b. the beaker is then placed in an oven which is at a temperature of about 100°C. until at least 90% of the water in the sample evaporates,

c. the beaker containing the sample is then removed from the oven and allowed to cool to room temperature (about 25°C.);

d. the water loss in the sample is then calculated according to the following formula:

$$\% \; H_2O \; lost = \frac{wt. \; loss, \; grams}{tot. \; water \; content, \; sample} \times 100$$

(the total water content of sample including both added water and water content of components utilized, measured in grams);

e. the water content of the sample is then adjusted to 90% or 95% water loss by adding the calculated amount of water to the sample and mixing thoroughly; and

f. the absolute viscosity of the adjusted ample is then determined at 120°C. using a Brookfield Viscometer.

The following formulations are measured in this way:

1a. aqueous solutions comprising 72% molasses and having 0%, 5%, 10% and 19% ethylene glycol are prepared and evaporated to 95% water loss. The viscosity of each solution is measured and plotted in Figure 1a.

1b. aqueous solutions comprising 72% molasses and having 5% and 19% of, respectively, diethylene glycol, glycerine and propylene glycol are prepared and evaporated to 90% water loss. The viscosity of each solution is measured and plotted in Figure 1b.

By reference to Figures 1a and 1b, the benefits derived from addition of a viscosity modifier to the compositions of the present invention are readily apparent, as are the points where the benefits become less pronounced, i.e., beyond the most effective percent viscosity modifier according to a cost/benefit analysis. For instance, the addition of additional ethylene glycol from 10% to 19% in example 1a leads to little viscosity modification benefit for the large increase in added ethylene glycol. Consequently, Figure 1a strongly indicates that the most effective amount of ethylene glycol when used as a viscosity modifier is about 10%.

## Example II

The coking time of several formulations is measured by the following procedure which determines the time required to decompose a standard quantity of a formulation to a solid, brittle mass at a standard temperature, thereby providing an indication of the coke forming tendency of a given formulation:

   a. 5.00 grams (± 0.10 grams) of a sample is placed in a porcelain crucible;

   b. the crucible is then placed in a furnace having a temperature of 400°F.;

   c. at regular intervals, the crucible is removed and the sample cooled to room temperature and observed and appearance noted: and

   d. step c is repeated until the sample has become "brittle", meaning that the sample is hard and unmovable with a metal spatula and will crack if pressure is applied (if the sample is not brittle after 60 minutes of heating, the test is stopped and that fact is noted).

The following formulations are measured in this way:

   IIa. aqueous solutions comprising 50% lignosulphonate and having 0%, 5%, 10% and 20%, respectively, of ethylene glycol and glycerine are prepared. The coking time of each solution is measured and plotted in Figure 2a.

   IIb. aqueous solutions comprising 50% sucrose and having 0%, 5%, 10% and 20%, respectively of fuel oil, ethylene glycol and tetraethylene glycol are prepared. The coking time of each solution is measured and plotted in Figure 2b.

   IIc. aqueous solutions comprising 72% molasses and having 0%, 5% and 10% of formamide are prepared. The coking time of each solution is measured and plotted in Figure 2c.

By reference to Figures 2a, 2b and 2c, the benefits of a coking time modifier are aptly illustrated. It will be also be seen that such benefits become less pronounced after a certain level of coking time modifier is present, e.g., maximum effectiveness according to a cost/benefit analysis of the coking time modifier. For instance, by reference to Figure 2a it will be observed that, when the nitrogen oxides reducing treatment component is lignosulphonate, the amount of ethylene glycol, when used as coking time modifier, should preferably be about 10%.

## Example III

The antiscalant ability of several formulations is measured by the following procedure:

Tap water (100 grams), with and without antiscalant compositions components, having an analyzed metals level of 3 milligrams (mg)/liter (l) of magnesium, 136 mg/l of calcium (equivalent to 352 mg/l of calcium carbonate $\{CaCO_3\}$), is combined in a container with 1 milliliter (ml) of 1% sodium bicarbonate solution ($NaHCO_3$) and the resulting solution boiled for 30 minutes. The liquid is then discarded and the container washed twice with distilled water. Calcium precipitated on the container is dissolved by the addition of 5 ml of 6N hydrochloric acid. The calcium content of the dissolved deposits is then measured by atomic absorption spectroscopy.

The results are set out in Table 2.

Table 2

| Antiscalant | $Ca^{++}$ Deposit (mg Ca/liter) |
|---|---|
| --- | 132.0 |
| 0.1% Ferrophos 8441 | 1.8 |
| 0.01% Ferrophos 8441 | 10.4 |
| 0.1% Ferrophos 8461 | 64.0 |
| 0.01% Ferrophos 8461 | 44.0 |
| 0.1% Ferrophos 8500 | 9.0 |
| 0.01% Ferrophos 8500 | 16.0 |
| 0.1% Citric Acid | 15.6 |
| 0.01% Citric Acid | 92.0 |

It will readily be seen that the use of an antiscalant substantially reduces the deposit of calcium, even compared to like amounts of a sequestering agent such as citric acid.

The above description is for the purpose of teaching the person of ordinary skill in the art how to practice the present invention, and it is not intended to detail all of those obvious modifications and variations of it which will become apparent to the skilled worker upon reading the description. It is intended, however, that all such obvious modifications and variations be included within the scope of the present invention which is defined by the following claims.

**Claims**

1. A low-cost composition for introduction through an injector having an injector tip into a high temperature environment for reducing the nitrogen oxides concentration in the high temperature environment, the composition comprising:

a) a low-cost nitrogen oxides reducing treatment component which is effective at reducing the nitrogen oxides concentration in the environment, wherein said nitrogen oxides reducing treatment component is of a viscosity sufficiently high to substantially interfere with its flow at conditions existing at the injector tip and has a tendency to coke at conditions existing at the injector tip;

b) dilution water; and

c) a viscosity/coking time modifier having a boiling point greater than about the boiling point of said dilution water at conditions existing at the injector tip and viscosity less than that of said nitrogen oxides reducing treatment component at conditions existing at the injector tip and wherein said viscosity/coking time modifier also reduces the nitrogen oxides concentration in the environment, and further wherein said viscosity/coking time modifier present in an amount sufficient to reduce the flow interference of said nitrogen oxides reducing treatment component.

2. The composition of claim wherein said viscosity/coking time modifier is present in an amount no greater than that approximately most efficient according to a cost-benefit analysis.

3. The composition of claim 1 wherein the high temperature environment in which the composition is introduced comprises the effluent from the combustion of a carbonaceous fuel which is at a temperature of greater than about 800°F.

4. The composition of claim 3 wherein said nitrogen oxides reducing treatment component comprises an oxygenated hydrocarbon having a molecular weight of greater than about 150.

5. The composition of claim 4 wherein said nitrogen oxides reducing treatment composition is selected from the group consisting of sugar, lignin derivatives, starch, cellulosic materials and low rank coals and mixtures thereof.

6. The composition of claim 5 wherein said nitrogen oxides reduction treatment component comprises about 25% to about 95% by weight of said composition.

7. The composition of claim 3 wherein said viscosity/coking time modifier is either water soluble or water dispersible.

8. The composition of claim 7 wherein said viscosity/coking time modifier is selected from the group consisting of oxygenated hydrocarbons costing at least about 1.5 times that of said nitrogen oxides reducing treatment composition and non-oxygenated hydrocarbons.

9. The composition of claim 8 wherein said viscosity/coking time modifier is selected from the group consisting of formamide, glycerine, propylene glycol, ethylene glycol, diethylene glycol, triethylene glycol, hexylene glycol, tetraethylene glycol, distillate fuels and menhaden oil and mixtures thereof.

10. The composition of claim 9 wherein said viscosity/coking time modifier comprises about about 1% to about 25% by weight of said composition.

11. The composition of claim 1 which further comprises a sequestering agent which also reduces the nitrogen oxides concentration in the environment.

12. The composition of claim 11 wherein said sequestering agent is selected from the group consisting of organic hydroxy acids, amine derived polyacetic acids, salts thereof and mixtures thereof.

13. The composition of claim 12 wherein said sequestering agent is selected from the group consisting of gluconic acid, tartaric acid, glucoheptonic acid, citric acid, nitrilotriacetic acid, diethylenetriamine pentacetic acid, N-hydroxy ethyl ethylenediaminetetraacetic acid and ethylenediaminetetraacetic acid or salts thereof, and mixtures thereof.

14. The composition of claim 1 which further comprises an antiscalant which also reduces the nitrogen oxides concentration in the environment.

15. The composition of claim 14 wherein said antiscalant comprises a polycarboxylic acid or salt thereof.

16. The composition of claim 15 wherein said antiscalant is selected from the group consisting of a polyacrylic acid, an organo-phosphonic acid and phosphoric acid, and salts and mixtures thereof.

17. The composition of claim 1 which further comprises an emulsifier/dispersant.

18. The composition of claim 17 wherein said emulsifier/dispersant is selected from the group consisting of nonylphenoxypoly(ethyleneoxy) ethanol, alkylphenoxypoly(ethyleneoxy) ethanol, substituted imidazoline of tall oil fatty acids, linear alkylaryl triethanolamine sulfonate and sodium lauryl sulfate and mixtures thereof.

19. A low-cost composition for introduction through an injector having an injector tip into a high temperature environment for reducing the nitrogen oxides concentration in the high temperature environment, the composition comprising:

a) a low-cost nitrogen oxides reducing treatment component which is effective at reducing the nitrogen oxides concentration in the environment;

b) dilution water, wherein said nitrogen oxides reducing treatment component and/or said dilution water contain hardness metals capable of causing deposits at the injector tip; and

c) a sequestering agent capable of preventing deposits at the injector due to hardness metals found in said nitrogen oxides treatment component and/or said dilution water and wherein said sequestering agent also reduces the nitrogen oxides concentration in the environment.

20. The composition of claim 19 wherein the high temperature environment in which the composition is introduced comprises the effluent from the combustion of a carbonaceous fuel which is at a temperature of greater than about 800°F.

21. The composition of claim 20 wherein said nitrogen oxides reducing treatment component comprises an oxygenated hydrocarbon having a molecular weight of greater than about 150.

22. The composition of claim 21 wherein said nitrogen oxides reducing treatment component is selected from the group consisting of sugar, lignin derivatives, starch, cellulosic materials and low rank coals and mixtures thereof.

23. The composition of claim 22 wherein said nitrogen oxides reducing treatment component comprises about 25% to about 95% by weight of said composition.

24. The composition of claim 19 wherein said sequestering agent is selected from the group consisting of organic hydroxy acids, amine derived polyacetic acids, salts thereof and mixtures thereof.

25. The composition of claim 24 wherein said sequestering agent is selected from the group consisting of gluconic acid, tartaric acid, glucoheptonic acid, citric acid, nitrilotriacetic acid, diethylenetriamine pentaacetic acid, N-hydroxy ethyl ethylenediaminetetraacetic acid and ethylenediaminetetraacetic acid or salts thereof, and mixtures thereof.

26. The composition of claim 25 wherein said sequestering agent is present in an amount sufficient to substantially reduce the buildup of deposits of hardness metals at the injector tip.

27. The composition of claim 26 wherein said sequestering agent is present in an amount consistent with a positive cost-benefit analysis of the sequestering function provided by said sequestering agent.

28. The composition of claim 27 wherein said sequestering agent comprises about 0.1% to about 10% of said composition.

29. The composition of claim 19 which further comprises an antiscalant which also reduces the nitrogen oxides concentration in the environment.

30. The composition of claim 30 wherein said antiscalant comprises a polycarboxylic acid or salt thereof.

31. The composition of claim 31 wherein said antiscalant is selected from the group consisting of a polyacrylic acid, an organo-phosphonic acid and a phosphoric acid, and salts and mixtures thereof.

32. The composition of claim 19 which further comprises an emulsifier/dispersant.

33. The composition of claim 32 wherein said emulsifier/dispersant is selected from the group consisting of nonylphenoxypoly(ethyleneoxy) ethanol, alkylphenoxypoly(ethyleneoxy) ethanol, substituted imidazoline of tall oil fatty acids, linear alkylaryl triethanolamine sulfonate and sodium lauryl sulfate and mixtures thereof.

34. A low-cost composition for introduction through an injector having an injector tip into a high temperature environment for reducing the nitrogen oxides concentration in the high temperature environment, the composition comprising:

a) a low-cost nitrogen oxides reducing treatment component which is effective at reducing the nitorgen oxides concentration in the environment;

b) dilution water, wherein said nitrogen oxides reducing treatment component and/or said dilution water contain hardness metals capable of causing deposits at the injector tip; and

c) an antiscalant capable of preventing deposits at the injector due to hardness metals found in said nitrogen oxides treatment component and/or said dilution water and wherein saaid antiscalant also reduces the nitrogen oxides concentration in the environment.

35. The composition of claim 34 wherein the high temperature environment in which the composition is introduced comprises the effluent from the combustion of a carbonaceous fuel which is at a temperature of greater than about 800°F.

36. The composition of claim 35 wherein said nitrogen oxides reducing treatment component comprises an oxygenated hydrocarbon having a molecular weight of greater than about 150.

37. The composition of claim 36 wherein said nitrogen oxides reducing treatment component is selected from the group consisting of sugar, lignin derivatives, starch, cellulosic materials and low rank coals and mistures thereof.

38. The composition of claim 37 wherein said nitrogen oxides reducing treatment component comprises about 25% to about 95% by weight of said composition.

39. The composition of claim 34 wherein said antiscalant comprises a polycarboxylic acid or salt thereof.

40. The composition of claim 39 wherein said antiscalant is selected from the group consisting of a polyacrylic acid, an organo-phosphonic acid and phosphoric acid, and salts and mixtures thereof.

41. The composition of claim 40 wherein said antiscalant is present in an amount sufficient to substantially reduce the buildup of deposits of hardness metals at the injector tip.

42. The composition of claim 41 wherein said antiscalant is present in an amount consistent with a positive cost-benefit analysis of the antiscaling function provided by said antiscalant agent.

43. The composition of claim 42 wherein said antiscalant comprises about 0.01% to about 1% of said composition.

44. The composition of claim 34 which further comprises an emulsifier/dispersant.

45. The composition of claim 44 wherein said emulsifier/dispersant is selected from the group consisting of nonylphenoxypoly(ethyleneoxy) ethanol, alkylphenoxypoly(ethyleneoxy) ethanol, substituted imidazoline of tall oil fatty acids, linear alkylaryl triethanolamine sulfonate and sodium lauryl sulfate and mixtures thereof.

FIG. 1a

VISCOSITY (CPS)
(THOUSANDS)

ETHYLENE GLYCOL (WGT % ADDED)

□ ETHYLENE GLYCOL

EP 0 340 666 A1

FIG. 1b

FIG. 2a

EP 0 340 666 A1

FIG. 2B

EP 0 340 666 A1

FIG. 2C

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| P,A | WO-A-8 806 487 (FUEL TECH. INC.) * Whole document * ----- | 1-45 | B 01 D 53/34 C 10 L 10/00 |

TECHNICAL FIELDS SEARCHED (Int. Cl.4)

B 01 D
C 10 L

The present search report has been drawn up for all claims

| Place of search | Date of completion of the search | Examiner |
|---|---|---|
| THE HAGUE | 25-08-1989 | BOGAERTS M.L.M. |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

................................................................

& : member of the same patent family, corresponding
document

EPO FORM 1503 03.82 (P0401)